# EUROPEAN PATENT SPECIFICATION

(11) **EP 4 040 350 B1**
(45) Date of publication and mention of the grant of the patent: **25.12.2024**
(21) Application number: 20873108.3
(22) Date of filing: 24.09.2020
(51) Int. Cl.: G06Q 10/00, G06F 21/62

(54) **FLUOROCARBON MANAGEMENT SYSTEM, MANAGER NODE, AND FLUOROCARBON MANAGEMENT METHOD**
FLUORKOHLENSTOFFVERWALTUNGSSYSTEM, VERWALTUNGSKNOTEN UND FLUORKOHLENWASSERSTOFFVERWALTUNGSVERFAHREN
SYSTÈME DE GESTION DE FLUOROCARBONE, NOEUD GESTIONNAIRE ET PROCÉDÉ DE GESTION DE FLUOROCARBONE

(30) Priority: 30.09.2019 JP 2019180994
(43) Date of publication of application: 10.08.2022
(73) Proprietor: Daikin Industries, Ltd., Osaka-shi, Osaka 530-0001 (JP)
(72) Inventor: MIURA, Takafusa, Osaka-shi, Osaka 530-8323 (JP); INUGA, Shinya, Osaka-shi, Osaka 530-8323 (JP)
(74) Representative: Hoffmann Eitle
(86) International application number: PCT/JP2020/036014
(87) International publication number: WO 2021/065667

(56) References cited:
- WO-A1-2019/111877
- CN-A- 108 830 342
- CN-A- 109 299 957
- CN-A- 109 633 114
- JP-A- 2002 189 794
- JP-A- 2015 125 672
- US-A1- 2017 221 052
- ANONYMOUS: "Blockchain for Traceability in Minerals and Metals Supply Chains: Opportunities and Challenges", 20 December 2017 (2017-12-20), XP055607065, Retrieved from the Internet <URL:https://www.rcsglobal.com/wp-content/uploads/2018/09/ICMM-Blockchain-for-Traceability-in-Minerals-and-Metal-Supply-Chains.pdf> [retrieved on 20190718]
- WIKIPEDIA: "Blockchain - Wikipedia", 12 September 2019 (2019-09-12), XP055969418, Retrieved from the Internet <URL:https://en.wikipedia.org/w/index.php?title=Blockchain&oldid=915330948> [retrieved on 20221010]
- "Mastering Blockchain", 17 March 2017, PACKT PUBLISHING, ISBN: 978-1-78712-544-5, article IMRAN BASHIR: "Mastering Blockchain", XP055393678

## Description

### [Technical Field]

The present disclosure relates to fluorocarbon management technology.

### [Background Art]

Currently, fluorocarbon management is performed as follows. An air conditioner manager requests a fluorocarbon filling and collecting operator to handle fluorocarbon and receive a report on collected volume or filled volume of fluorocarbon from the requested fluorocarbon filling and collecting operator. The air conditioner manager reports leakage volume of fluorocarbon to the authorities, which is calculated based on the collected volume or filled volume of fluorocarbon.

As an existing system for fluorocarbon management, there is a refrigerant management system of Japan Refrigerants and Environment Conservation Organization (JRECO). In JRECO's refrigerant management system, an air conditioner manager registers an air conditioner on the refrigerant management system, and a fluorocarbon filling and collecting operator registers an inspection and maintenance record of the air conditioner. Also, CN 109 299 957 A relates to a blockchain-based traceability monitoring system for hazardous product containers, wherein identity verification and quality inspection is performed to allow an interaction with the hazardous products.

### [Citation List]

### [Non Patent Literature]

[NPL 1]
https://www.jreco.or.jp/freon_system.html

### [Summary of Invention]

### [Technical Problem]

The present disclosure proposes a technology for improving data authenticity in a fluorocarbon management system.

### [Solution to Problem]

The subject-matter of the independent claims solves the above technical problem/s. The dependent claims describe further preferred embodiments, and the following description exemplifies best modes for carrying out the present invention.

Claims 1, 10 disclose the present invention. Preferred embodiments are disclosed in claims 2-9. According to an embodiment of the present invention, data authenticity regarding each fluorocarbon-related event can be improved.

Also, according to an embodiment of the present invention, distribution volume of fluorocarbon is managed in the distribution ledger and the fluorocarbon manager is managed in a separate database. Therefore, the fluorocarbon manager can be changed without affecting the recording of the distribution volume of fluorocarbon.

Also, according to an embodiment of the present invention, proper implementation of fluorocarbon disposal can be ensured.

Also, according to an embodiment of the present invention, a specific node is designated as a management node and a fluorocarbon management system can be implemented as a private blockchain network.

Also, according to an embodiment of the present invention, nodes other than the management node can be motivated to perform mining.

Also, according to an embodiment of the present invention, the management node having a relatively high computing resource can perform mining.

Also, according to an embodiment of the present invention, it is possible to know the fluorocarbon distribution status, such as distribution volume of fluorocarbon, based on authentic data in the fluorocarbon management system.

### [Brief Description of the Drawings]

[FIG. 1] FIG. 1 is a schematic diagram illustrating a fluorocarbon distribution flow according to an embodiment of the present disclosure;
[FIG. 2] FIG. 2 is a block diagram illustrating a fluorocarbon management system according to an embodiment of the present disclosure;
[FIG. 3] FIG. 3 is a block diagram illustrating a functional configuration of a management node according to an embodiment of the present disclosure;
[FIG. 4] FIG. 4 is a schematic diagram illustrating an adding process according to an embodiment of the present disclosure;
[FIG. 5] FIG. 5 is a schematic diagram illustrating a blockchain according to an embodiment of the present disclosure;
[FIG. 6] FIG. 6 is a block diagram illustrating a functional configuration of a node according to an embodiment of the present disclosure;
[FIG. 7] FIG. 7 is a diagram illustrating data items in a transaction according to an embodiment of the present disclosure;
[FIG. 8] FIG. 8 is a flowchart illustrating a fluorocarbon management process according to an embodiment of the present disclosure;
[FIG. 9] FIG. 9 is a schematic diagram illustrating a use case of a multi-signature address according to an embodiment of the present disclosure; and
[FIG. 10] FIG. 10 is a block diagram illustrating a hardware configuration of a management node and a node according to an embodiment of the present disclosure.

### [Description of Embodiments]

Hereinafter, embodiments will be described.

In the following embodiment, a fluorocarbon management system for managing data regarding fluorocarbon-related events is disclosed.

### [Outline of present disclosure]

In the fluorocarbon management system according to the present disclosure, fluorocarbon-related data is managed by a blockchain. The fluorocarbon-related data includes fluorocarbon volume, an apparatus using fluorocarbon, a manager of the apparatus, and the like, recorded at each fluorocarbon-related event from production, filling, collection, and recovery, to destruction of fluorocarbon.

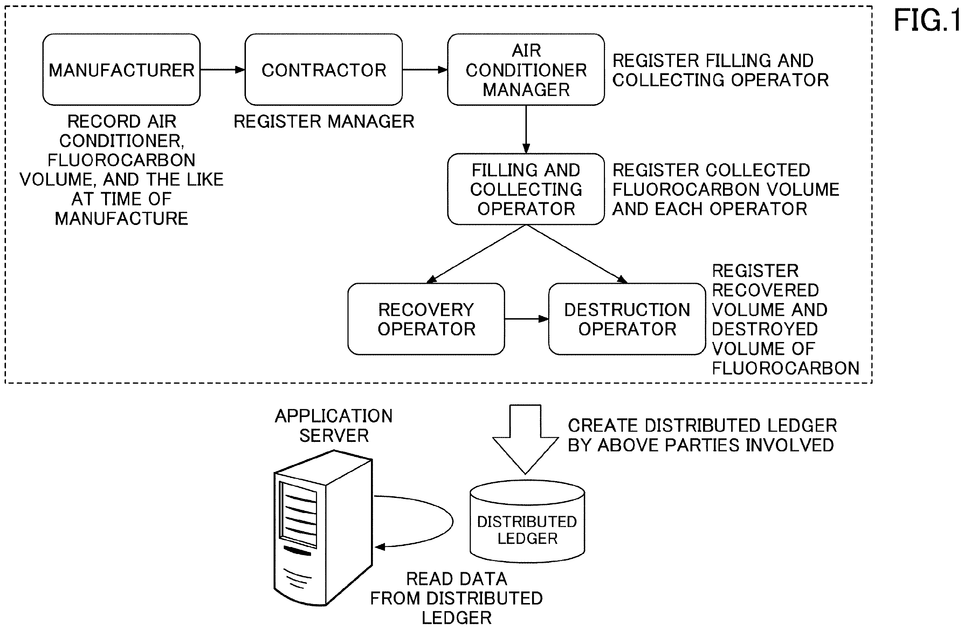

The flow of the fluorocarbon-related events regarding an air conditioner is, for example, illustrated in FIG. 1. When a manufacturer first fills the air conditioner with fluorocarbon, the filled volume of fluorocarbon and the air conditioner are recorded in the fluorocarbon management system. Next, when a contractor installs the air conditioner in a building and the like, it is recorded in the fluorocarbon management system that the air conditioner has been transferred to a building manager. Thereafter, when the air conditioner is filled with fluorocarbon or when fluorocarbon is collected from the air conditioner, the filled or collected volume of fluorocarbon and the filling and collecting operator are recorded in the fluorocarbon management system. When disposing and the like of the air conditioner, the recovered or destroyed volume of fluorocarbon, together with the recovery operator or destruction operator, is recorded in the fluorocarbon management system. These fluorocarbon-related data recorded in the fluorocarbon management system are managed on a distributed ledger of each node of a blockchain network.

Data stored in a blockchain format is difficult to falsify. For example, the manager of the fluorocarbon management system can know current total volume of fluorocarbon, volume of fluorocarbon managed by each building manager, occurrence of fraud transaction, and the like, from reliable data managed on a distributed ledger via an application server.

### [Fluorocarbon management system]

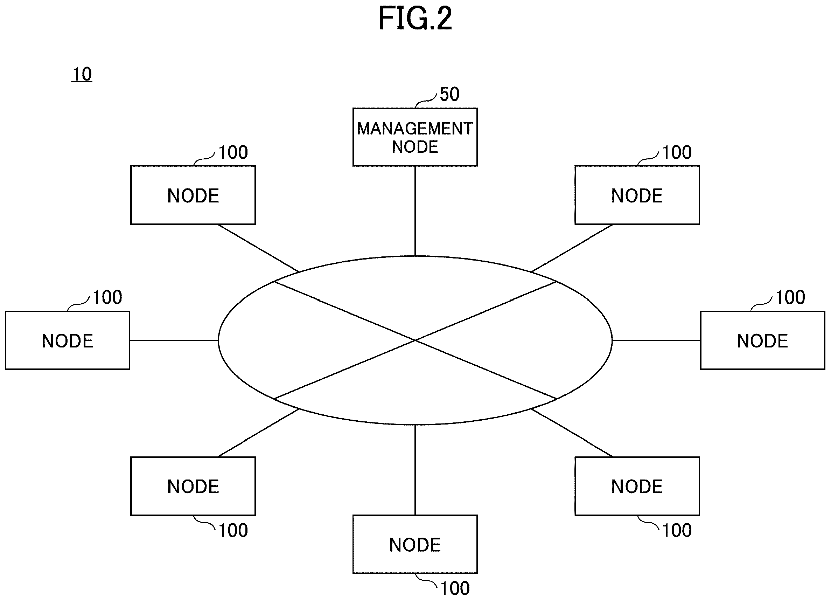

First, a configuration of the fluorocarbon management system according to an embodiment of the present disclosure will be described with reference to FIG. 2. The fluorocarbon management system according to the present embodiment is implemented as a private blockchain network, although not limited thereto. In the fluorocarbon management system, a block composed of transactions validated and approved by some trusted nodes such as a management node is distributed and managed among the nodes as a blockchain. FIG. 2 is a block diagram illustrating a configuration of the fluorocarbon management system according to an embodiment of the present disclosure.

As illustrated in FIG. 2, a fluorocarbon management system 10 includes a management node 50 and nodes 100. The management node 50 and nodes 100 are communicatively connected via a network such as the Internet, for example. The management node 50 may be, for example, a computing device, such as a server operated by an operator of the fluorocarbon management system 10. Each node 100 may be, for example, a user terminal such as a personal computer (PC) of each operator that performs fluorocarbon-related processing. The examples of the operator that performs fluorocarbon-related processing include a manufacturer and a contractor of an apparatus using fluorocarbon such as an air conditioner, a filling and collecting operator that fills and/or collects fluorocarbon, a recovery operator that recovers collected fluorocarbon, a destruction operator that destroys collected fluorocarbon, and the like.

The management node 50 is a node of the fluorocarbon management system 10 and functions as an agent server. The management node 50 operates the fluorocarbon management system 10 which is implemented as a private blockchain network. In the illustrated embodiment, only one management node 50 is illustrated, but the present disclosure is not limited thereto, and multiple management nodes 50 may be disposed.

### [Management node]

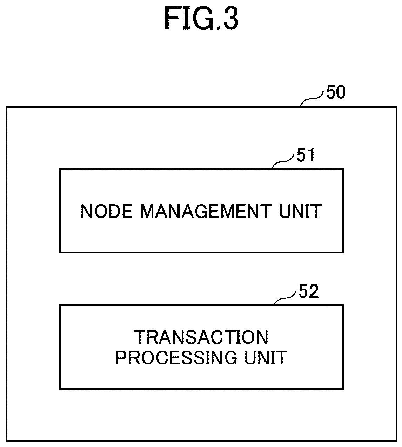

Next, referring to FIGS. 3 to 5, the management node 50 according to an embodiment of the present disclosure will be described. FIG. 3 is a block diagram illustrating a functional configuration of the management node 50 according to an embodiment of the present disclosure.

As illustrated in FIG. 3, the management node 50 includes a node management unit 51 and a transaction processing unit 52.

The node management unit 51 adds and removes the node 100 to/from the blockchain network and manages node information of the group of nodes 100. Specifically, the node management unit 51 determines whether or not the node 100 belongs to the fluorocarbon management system 10. That is, the node management unit 51 may permit the node 100 to join the blockchain network and may remove the joined node 100 from the blockchain network. The node management unit 51 holds node information, such as identification information of each node 100 that has joined, and a public key.

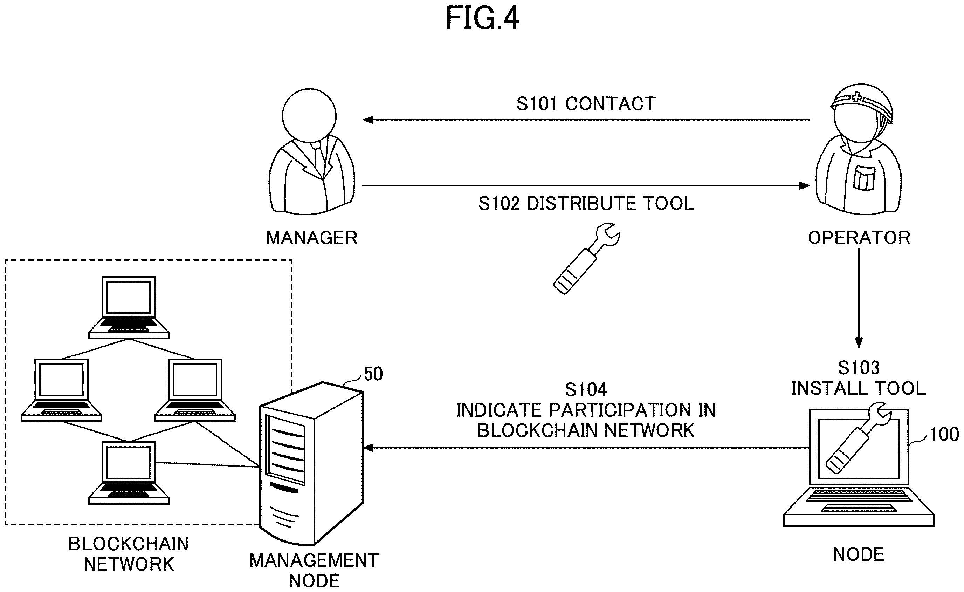

For example, when an operator desires to join the fluorocarbon management system 10, as illustrated in FIG. 4, the operator first accesses the management node 50 via its user terminal and the like and transmits an adding request to the management node 50 along with necessary information, in step S101.

Upon receipt of the adding request from the operator's user terminal, the management node 50 determines whether to add the operator based on the received information. When adding is permitted, the node management unit 51 distributes to the operator's user terminal a node tool or an application for functioning as the node 100 of the fluorocarbon management system 10, in step S102. For example, whether to add the operator may be determined automatically based on the information received from the operator, or may be determined based on result of examination by the manager based on the information received from the operator.

When adding is permitted and the node tool or the application is received, the operator installs the received node tool or application on the user terminal, in step S103. For example, in the installation process, the operator sets the identification information and password for accessing the blockchain network and creates a private key and a public key for use in the blockchain network.

After the installation process of the node tool or the application is completed, the operator participates in the fluorocarbon management system 10 by holding the created private key in the user terminal and sending the created public key to the management node 50, in step S104. The node management unit 51 holds the public key thus received from the operator with the identification information of the operator.

When there is an operator which violates the fluorocarbon management or violates rules of the fluorocarbon management system 10, the node management unit 51 may prohibit the node 100 of the operator from accessing the fluorocarbon management system 10 and may remove the operator from the blockchain network.

The transaction processing unit 52 monitors the fluorocarbon-related event in the fluorocarbon management system 10 based on transactions related to the fluorocarbon-related event. For example, the fluorocarbon-related event may include one or more of the following: fluorocarbon production, fluorocarbon destruction, fluorocarbon recovery, fluorocarbon filling, fluorocarbon collection, a change of a fluorocarbon handler, and a transfer of the apparatus using fluorocarbon (for example, an air conditioner, a refrigerator, a cylinder, and the like). For example, the transactions may include one or more of the following: date, name of the fluorocarbon handler, identification information of the apparatus using fluorocarbon, transfer volume of fluorocarbon, type of fluorocarbon, fluorocarbon handling status, type of handler, name of a fluorocarbon producer, and identification information of fluorocarbon manager. Specifically, when the node 100 that has joined the fluorocarbon management system 10 performs the fluorocarbon-related event, the node 100 generates a transaction related to the fluorocarbon-related event and transmits the generated transaction to the management node 50 of the blockchain network. The transaction may include a hash value of transaction information about the fluorocarbon-related event performed and data in which the hash value is encoded by the private key of the node 100.

When the transaction generated in this manner is received from node 100, the transaction processing unit 52 validates the received transaction and composes a block from the approved transaction. For example, to verify the transaction, the transaction processing unit 52 decodes the data encoded by the public key of the node 100 held in the node management unit 51 and compares the decoded data with the hash value contained in the transaction. When the decoded data matches the hash value, the transaction processing unit 52 approves and holds the transaction.

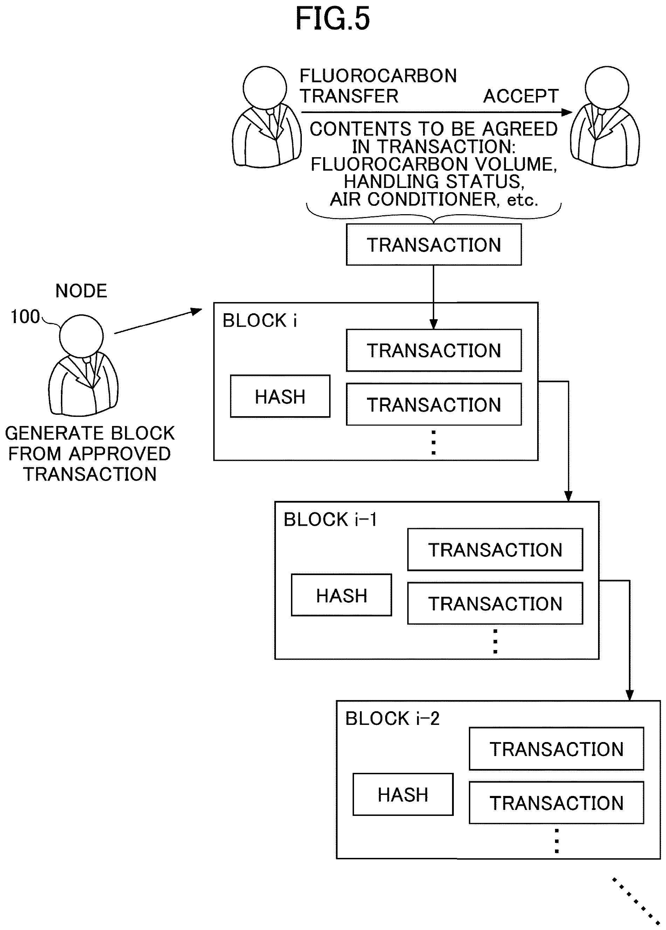

When the transaction received from the group of nodes 100 is validated, and a predetermined block generation condition is satisfied, the transaction processing unit 52 composes a block from the approved transaction held and distributes the composed block to each node 100 of the blockchain network, as illustrated in FIG. 5. For example, block i is composed of a transaction approved after generation of immediately preceding block i-1 and a hash value generated by mining block i-1, and is added to the blockchain connecting from block 0 to block i-1.

In one example, the transaction processing unit 52 may perform mining of a previously composed block, compose a block from a hash value generated by the mining and from the approved transaction, and add the block to the blockchain that is distributed and managed among the nodes 100.

In another example, the transaction processing unit 52 may compose a block from a hash value generated by mining by the other node 100 and from the approved transaction and add the block to the blockchain that is distributed and managed among the nodes 100. In this case, the transaction processing unit 52 may reward the node 100 that performed the mining to compose the block. This allows an incentive for load balancing of the nodes 100 without having only the management node 50 perform the large computational load mining.

In an embodiment, the transaction processing unit 52 may monitor distribution volume of fluorocarbon based on the data of the fluorocarbon-related event recorded in the blockchain. Specifically, fluorocarbon volume to be produced, destroyed, recovered, filled, collected, and the like is recorded in the blockchain. Accordingly, it is possible to know fluorocarbon distribution status such as the total volume of fluorocarbon currently in circulation and which volume of fluorocarbon is under the control of which operator. For example, the transaction processing unit 52 monitors a transaction related to a node 100, and when there is a significant inconsistency between the volumes of fluorocarbon inflow and outflow to/from the node 100, it can be determined that the operator may have disposed of fluorocarbon by fraud.

For example, such monitoring may be activated when the manager prepares a report on calculated leakage volume of fluorocarbon, when the manager checks the state of fluorocarbon in a specific air conditioner, when the manager checks the state of fluorocarbon related to the manager, and the like. When the manager prepares a report on the calculated leakage volume of fluorocarbon, the transaction processing unit 52 may calculate the calculated leakage volume of fluorocarbon from the produced volume, collected volume, filled volume, and destroyed volume of fluorocarbon of the transaction recorded in the distributed ledger. When the manager checks the state of fluorocarbon in a specific air conditioner, the transaction processing unit 52 may output the fluorocarbon handling status related to the air conditioner, the fluorocarbon volume for each handling status, the name of the handler, and the like, of the transaction recorded in the distributed ledger. When the manager checks the state of fluorocarbon related to the manager, the transaction processing unit 52 may output all of the following: the fluorocarbon handling status, the fluorocarbon volume for each handling status, the name of the handler, and the like, related to the manager of the transaction recorded in the distributed ledger.

### [Node]

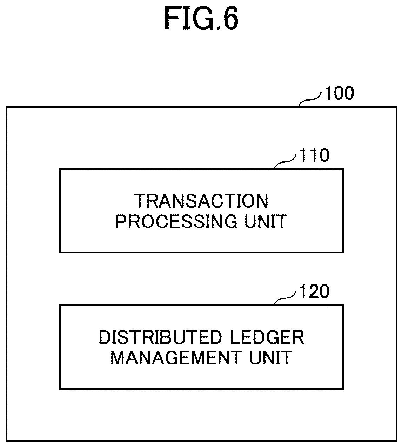

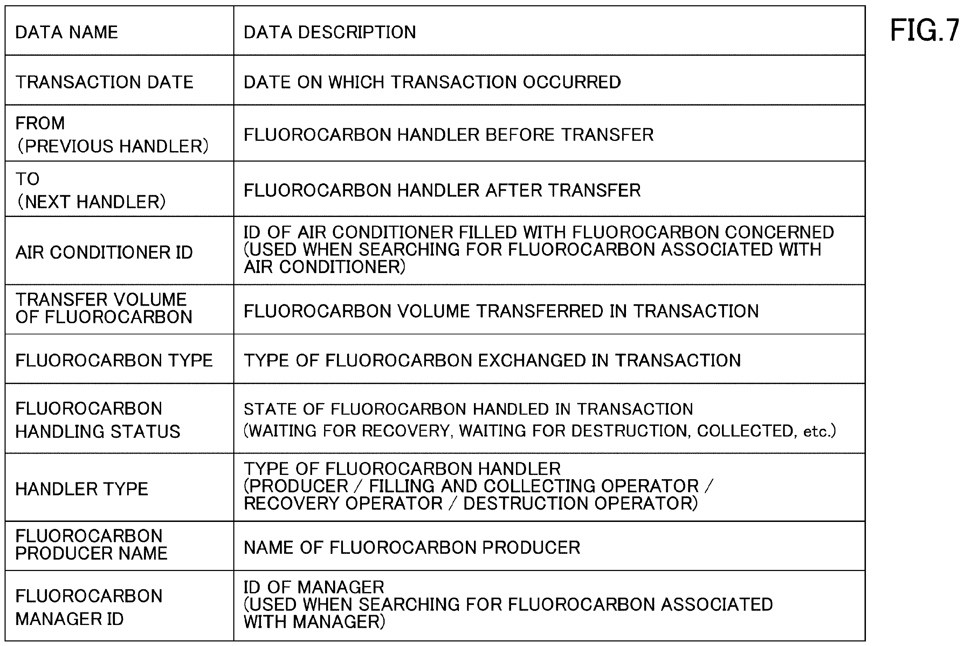

Referring to FIGS. 6 and 7, a node 100 according to an embodiment of the present disclosure will be described. The node 100 may be implemented as, for example, a computing device, such as a personal computer of each operator. In the computing device, a tool or an application provided by the management node 50 for accessing the fluorocarbon management system 10 is installed. FIG. 6 is a block diagram illustrating a functional configuration of the node 100 according to an embodiment of the present disclosure.

As illustrated in FIG. 6, the node 100 includes a transaction processing unit 110 and a distributed ledger management unit 120.

In response to occurrence of a fluorocarbon-related event, the transaction processing unit 110 generates a transaction related to the fluorocarbon-related event and transmits the generated transaction to the blockchain network. For example, the fluorocarbon-related event may include one or more of the following: fluorocarbon production, fluorocarbon destruction, fluorocarbon recovery, fluorocarbon filling, fluorocarbon collection, a change of a fluorocarbon handler, and a transfer of the apparatus using fluorocarbon (for example, an air conditioner, a refrigerator, a cylinder, and the like). For example, the transactions may include one or more of the following: date, name of the fluorocarbon handler, identification information of the apparatus using fluorocarbon, transfer volume of fluorocarbon, type of fluorocarbon, fluorocarbon handling status, type of handler, name of a fluorocarbon producer, and identification information of fluorocarbon manager.

For example, in response to the occurrence of the fluorocarbon-related event, the transaction processing unit 52 may generate a transaction including data items as illustrated in FIG. 7.

The data item "transaction date" indicates the date on which the transaction occurred.

The data item "from (previous handler)" indicates the fluorocarbon handler before transferring fluorocarbon, and the data item "to (next handler)" indicates the fluorocarbon handler after transferring fluorocarbon. For example, when the fluorocarbon-related event is a transfer of an apparatus using fluorocarbon, the handler of the apparatus using fluorocarbon before the transfer is indicated in "from (previous handler)" and the handler of the apparatus using fluorocarbon after the transfer is indicated in "to (next handler)".

The data item "air conditioner ID" indicates ID of the air conditioner filled with fluorocarbon. The "air conditioner ID" can be used to search for fluorocarbon associated with the air conditioner.

The data item "transfer volume of fluorocarbon" indicates fluorocarbon volume transferred in a transaction. For example, when the fluorocarbon-related event is fluorocarbon filling, the "transfer volume of fluorocarbon" indicates the fluorocarbon volume that is filled.

The data item "fluorocarbon type" indicates the type of fluorocarbon exchanged in the transaction.

The data item "fluorocarbon handling status" indicates the state of fluorocarbon handled in the transaction (for example, waiting for recovery, waiting for destruction, collected, and the like). For example, when the fluorocarbon-related event is fluorocarbon destruction, the "fluorocarbon handling status" indicates "waiting for destruction".

The data item "handler type" indicates the type of fluorocarbon handler (for example, producer/manufacturer, filling and collecting operator, recovery operator, destruction operator, and the like).

The data item "fluorocarbon handler name" indicates the name of the fluorocarbon handler.

The data item "fluorocarbon manager ID" indicates identification information (ID) of the fluorocarbon manager. The "fluorocarbon manager ID" may be associated with the name of the fluorocarbon manager in a database different from the distributed ledger for the blockchain. In other words, data related to transfer of fluorocarbon is managed in a distributed ledger, and information related to the manager is managed in a separate database. Accordingly, organizational changes on the manager side do not affect the fluorocarbon distributed ledger, making it possible to flexibly respond to changes in the organizational structure.

It should be noted that the data item described above is merely an example, and other data items may be included, or a portion of the data item described above may be omitted.

Different data items may be used depending on the type of fluorocarbon-related events.

For example, in the case of fluorocarbon production, data may be input by the fluorocarbon producer into data items such as "transaction date", "produced volume of fluorocarbon", "type of fluorocarbon", "name of fluorocarbon producer", and "fluorocarbon handling status (for example, production)", and a transaction may be generated.

In the case of fluorocarbon destruction, data may be input by the fluorocarbon destruction operator into data items such as "transaction date", "destruction volume of fluorocarbon", "type of fluorocarbon", "name of fluorocarbon destruction operator", and "state of handling of fluorocarbon (for example, destroyed)", and a transaction may be generated.

In the case of fluorocarbon recovery, data may be input by the fluorocarbon recovery operator into data items such as "transaction date", "recovery volume of fluorocarbon", "type of fluorocarbon", "name of fluorocarbon recovery operator", and "fluorocarbon handling status (for example, recovered)", and a transaction may be generated.

In the case of fluorocarbon filling and collection, data may be input by the fluorocarbon filling and collecting operator into data items such as "transaction date", "filled or collected volume of fluorocarbon", "type of fluorocarbon", "air conditioner ID", "name of filling and collecting operator", and "fluorocarbon handling status (for example, filled/collected, waiting for recovery, recovered, waiting for destruction, and destroyed)", and a transaction may be generated.

In the case of a change of fluorocarbon handler, data may be input by the fluorocarbon handler into data items such as "transaction date", "name of fluorocarbon handler (for example, names of fluorocarbon handlers before and after change)", "fluorocarbon volume", "type of fluorocarbon" and "fluorocarbon handling status (for example, waiting for collection, collected, waiting for recovery, recovered, waiting for destruction, and destroyed)", and a transaction may be generated.

In the case of a transfer of an apparatus using fluorocarbon, data may be input, by a transfer operator for the apparatus, into data items such as "transaction date", "air conditioner ID", and "location before and after air conditioner transfer", and a transaction may be generated.

The distributed ledger management unit 120 stores the block distributed from the management node 50 in the distributed ledger. When a block is generated from an approved transaction, the generated block is distributed to a group of nodes 100 of the blockchain network. The distributed ledger management unit 120 of each node 100 stores the received block in addition to the blockchain that is held. In this manner, a block storing the approved transaction is recorded in each node 100 in a blockchain format, making it substantially impossible to falsify the data.

### [Fluorocarbon management process]

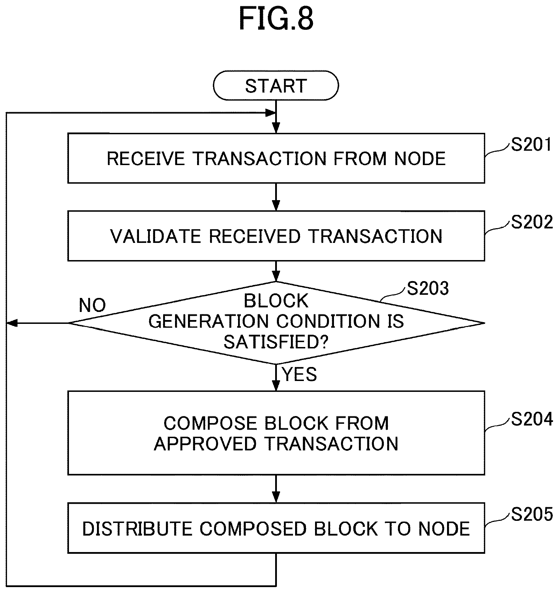

Next, a fluorocarbon management process according to an embodiment of the present disclosure will be described with reference to FIGS. 8 to 10. The fluorocarbon management process is implemented by the management node 50 and nodes 100 in the fluorocarbon management system 10 described above. The fluorocarbon management process may be implemented, for example, by processors of the management node 50 and nodes 100 executing a program or instruction. FIG. 8 is a flowchart illustrating a fluorocarbon management process according to an embodiment of the present disclosure.

As illustrated in FIG. 8, in step S201, the management node 50 receives a transaction from the node 100. Specifically, when a fluorocarbon-related event such as fluorocarbon production, fluorocarbon destruction, fluorocarbon recovery, fluorocarbon filling, fluorocarbon collection, a change of fluorocarbon handler, or a transfer of an apparatus using fluorocarbon is performed, the node 100 related to the fluorocarbon-related event generates a transaction related to the fluorocarbon-related event and transmits the generated transaction to the management node 50 of the blockchain network.

For example, in order to generate a transaction from data such as date, name of a fluorocarbon handler, identification information of an apparatus using fluorocarbon, transfer volume of fluorocarbon, type of fluorocarbon, fluorocarbon handling status, type of handler, name of a fluorocarbon producer, and identification information of a fluorocarbon manager, the node 100 may calculate a hash value of the data and may include in the transaction the calculated hash value and a signature in which the calculated hash value is encoded by a private key of the node 100.

In the present embodiment, the fluorocarbon management system 10 is implemented as a private blockchain network in which the management node 50 validates a transaction and generates a block from an approved transaction. The blockchain network according to the present disclosure is not limited thereto. For example, the management node 50 may be primarily responsible for adding and removing of a node and distribution of a tool or an application for accessing the fluorocarbon management system 10. In the blockchain network, not only the management node 50 but also the nodes 100 may validates a transaction and generates a block. In this case, the transaction generated by the node 100 may be distributed to, for example, the management node 50 and/or other node 100 and may be validated by the management node 50 and/or the other node 100. The validated transaction may be held by the management node 50 as an approved transaction.

In step S202, the management node 50 validates the received transaction. Specifically, the management node 50 decodes the signature of the transaction by the public key of the source node 100 and compares the decoding result with the hash value of the transaction. When the decoding result matches the hash value of the transaction, the management node 50 approves the received transaction and holds it as an approved transaction. On the other hand, when the decoding result does not match the hash value of the transaction, the management node 50 does not approve the received transaction.

In step S203, the management node 50 determines whether the block generation condition is satisfied. The block generation condition may be, for example, a predetermined block generation interval such as 10 minutes elapsed.

When the block generation condition is not satisfied (S204: NO), the management node 50 returns to step S201 and receives a next transaction. When the block generation condition is satisfied (S204: YES), the management node 50 composes a block from the approved transaction in step S204. Specifically, the management node 50 generates a block from a hash value acquired by performing mining or by having the other node 100 perform mining and the approved transaction.

In step S205, the management node 50 adds the newly composed block to the blockchain held in its distributed ledger and distributes the newly composed block to the group of nodes 100 of the blockchain network. Upon receipt of a block from the management node 50, each node 100 adds the received block to a blockchain that is held in its distributed ledger. Then, the management node 50 returns to step S201 and receives a transaction for a next block.

In an embodiment, a fluorocarbon disposal cost may be delivered via a multi-signature address set among the nodes 100 related to fluorocarbon disposal.

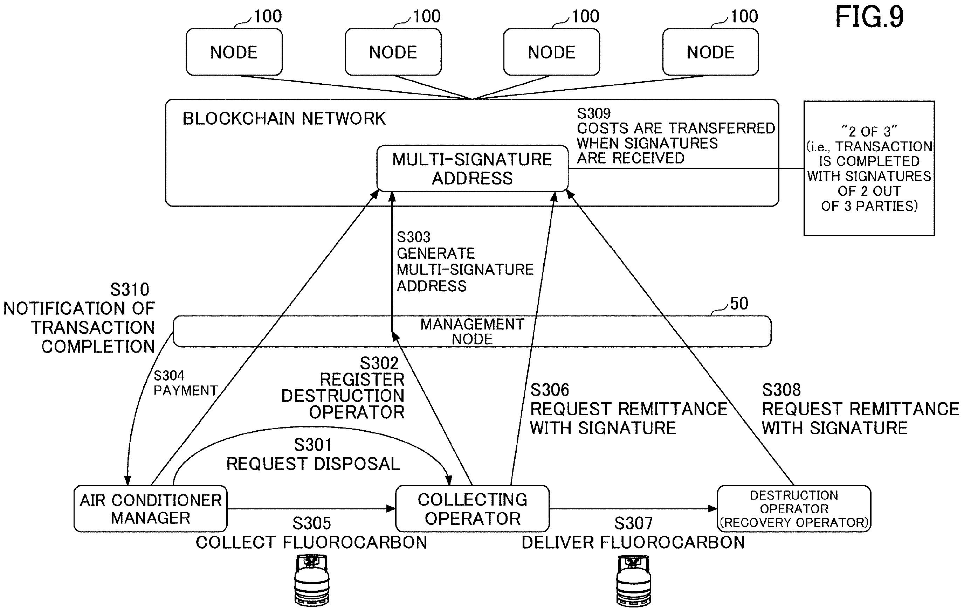

For example, as illustrated in FIG. 9, in step S301, an air conditioner manager (for example, a building owner) requests a collecting operator to dispose of the air conditioner via the management node 50. For example, the manager may designate the collecting operator from the collecting operator list provided by the management node 50 and request the disposal of the air conditioner.

In step S302, the collecting operator requests the management node 50 to register the destruction operator (or the recovery operator).

In step S303, the management node 50 generates a 2-of-3 multi-signature address among the management node 50, the node 100 of the collecting operator, and the node 100 of the destruction operator.

In step S304, when the management node 50 receives the fluorocarbon disposal cost from the air conditioner manager, the management node 50 sends a transaction indicating the fluorocarbon disposal cost to the multi-signature address. The fluorocarbon disposal cost may be automatically deducted from a wallet and the like of the manager.

In step S305, the collecting operator collects fluorocarbon from the requested air conditioner.

In step S306, the node 100 of the collecting operator sends a transaction with a signature requesting the cost of the fluorocarbon collection to the multi-signature address.

In step S307, the collecting operator delivers the collected fluorocarbon to the destruction operator.

In step S308, the node 100 of the destruction operator sends a transaction with a signature requesting the cost of the fluorocarbon destruction to the multi-signature address.

In step S309, because the signatures have been received from the node 100 of the collecting operator and the node 100 of the destruction operator, the collection cost and the destruction cost are transferred from the multi-signature address to each of the node 100 of the collecting operator and the node 100 of the destruction operator.

According to the present embodiment, by using the 2-of-3 multi-signature address, it is possible to reliably dispose of fluorocarbon and transfer costs, and fraud related to the disposal of fluorocarbon can be prevented.

### [Hardware configuration of node]

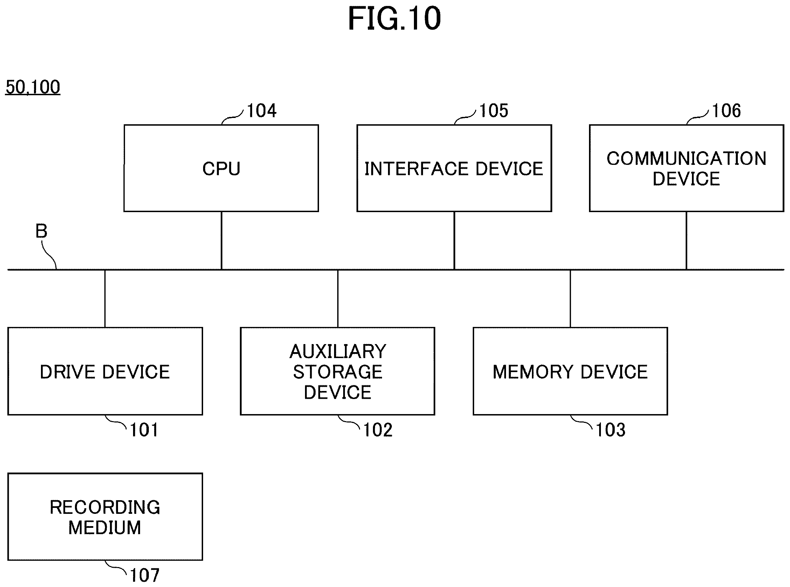

The management node 50 and the node 100 may have, for example, a hardware configuration as illustrated in FIG. 10. That is, the management node 50 and the node 100 include a drive device 101, an auxiliary storage device 102, a memory device 103, a central processing unit (CPU) 104, an interface device 105, and a communication device 106, that are interconnected via a bus B.

Various computer programs including programs for implementing the various functions and processes described above in the management node 50 and the node 100, may be provided by a recording medium 107, such as a compact disk-read only memory (CD-ROM). When the recording medium 107 on which the program is stored is set to the drive device 101, the program is installed in the auxiliary storage device 102 from the recording medium 107 via the drive device 101. The program need not necessarily be installed from the recording medium 107, and may be downloaded from any external device via a network and the like. The auxiliary storage device 102 stores the installed program and stores necessary files, data, and the like. The memory device 103 reads out and stores a program or data from the auxiliary storage device 102 when an instruction to start the program is given. The CPU 104, which functions as a processor, performs various functions and processes of the management node 50 and the node 100 described above according to various data such as a program stored in the memory device 103 and parameters necessary to execute the program. The interface device 105 is used as a communication interface for connecting to a network or an external device. The communication device 106 performs various communication processing for communicating with an external device.

The management node 50 and the node 100 are not limited to the hardware configurations described above, and may be implemented in any other suitable hardware configuration.

While the embodiments have been described, it will be understood that various modifications of the forms and details are possible without departing from the scope of the present invention defined by the claims.

### [Description of the Reference Numeral]

- 10: fluorocarbon management system
- 50: management node
- 51: node management unit
- 52: transaction processing unit
- 100: node
- 110: transaction processing unit
- 120: distributed ledger management unit

## Claims

1. A fluorocarbon management system (10) comprising:
a group of nodes (100), wherein each node is a computer device; and
a blockchain network connecting the group of nodes (100), wherein
in response to occurrence of a predetermined fluorocarbon-related event, an origin node (100) related to the fluorocarbon-related event
generates a transaction related to the fluorocarbon-related event, the transaction including
a hash value of transaction information about the fluorocarbon-related event performed and
data, in the data the hash value is encoded by a private key of the origin node (100), and
sends the generated transaction to the blockchain network,
a node (50, 100) that received the transaction validates the received transaction by
decoding the data by a public key of the origin node (100) held in the node (50, 100),
comparing the decoded data with the hash value contained in the transaction and approving the transaction when the decoded data matches the hash value, and
the group of nodes (100) add a block composed from the approved transaction to a blockchain.

2. The fluorocarbon management system (10) according to claim 1, wherein the fluorocarbon-related event includes one or more of fluorocarbon production, fluorocarbon destruction, fluorocarbon recovery, fluorocarbon filling, fluorocarbon collection, a change of a fluorocarbon handler, and a transfer of an apparatus using fluorocarbon.

3. The fluorocarbon management system (10) according to claim 1 or 2, wherein the transaction includes one or more of date, name of a fluorocarbon handler, identification information of an apparatus using fluorocarbon, transfer volume of fluorocarbon, type of fluorocarbon, fluorocarbon handling status, type of handler, name of a fluorocarbon producer, and identification information of a fluorocarbon manager.

4. The fluorocarbon management system (10) according to claim 3, wherein the identification information of a fluorocarbon manager is associated with a name of the fluorocarbon manager in a database different from the blockchain.

5. The fluorocarbon management system (10) according to any one of claims 1 to 4, wherein a fluorocarbon disposal cost is delivered via a multi-signature address set among nodes (100) related to fluorocarbon disposal.

6. The fluorocarbon management system (10) according to any one of claims 1 to 5, wherein the group of nodes include a management node (50) of the fluorocarbon management system.

7. The fluorocarbon management system (10) according to claim 6, wherein the management node (50) is configured to permit a node (100) to join the blockchain network and remove the joined node (100) from the blockchain network.

8. The fluorocarbon management system (10) according to claim 6 or 7, wherein the management node (50) rewards a node (100) that performed mining to compose a block.

9. The fluorocarbon management system (10) according to any one of claims 6 to 8, wherein the management node (50) performs mining to compose a block.

10. A fluorocarbon management method for a fluorocarbon management system (10) including a group of nodes (100), wherein each node is a computer device, and a blockchain network connecting the group of nodes (100), the fluorocarbon management method comprising:
generating, in response to occurrence of a predetermined fluorocarbon-related event, a transaction related to the fluorocarbon-related event by an origin node related to the fluorocarbon-related event, the transaction including a hash value of transaction information about the fluorocarbon-related event performed and data, in the data the hash value is encoded by a private key of an origin node (100) related to the fluorocarbon-related event, and sending (S201) the generated transaction to the blockchain network;
validating the received transaction by a node (50, 100) that received the transaction by decoding the data by a public key of the origin node (100) held in the node (50, 100), comparing the decoded data with the hash value contained in the transaction and approving the transaction when the decoded data matches the hash value; and
adding a block composed from the approved transaction to a blockchain by the group of nodes connected to the blockchain network.

## Patentansprüche

1. Fluorkohlenstoffverwaltungssystem (10), umfassend:
eine Gruppe von Knoten (100), wobei jeder Knoten eine Computervorrichtung ist; und
ein Blockchain-Netzwerk, das die Gruppe von Knoten (100) verbindet, wobei
als Reaktion auf das Auftreten eines vorbestimmten Fluorkohlenstoff-bezogenen Ereignisses ein Ursprungsknoten (100), der sich auf das Fluorkohlenstoff-bezogene Ereignis bezieht,
eine Transaktion erzeugt, die sich auf das Fluorkohlenstoff-bezogene Ereignis bezieht, wobei die Transaktion einschließt
einen Hash-Wert von Transaktionsinformationen über das durchgeführte Fluorkohlenstoff-bezogene Ereignis und
Daten, wobei der Hash-Wert in den Daten durch einen privaten Schlüssel des Ursprungsknotens (100) kodiert ist, und
die erzeugte Transaktion an das Blockchain-Netzwerk sendet,
wobei ein Knoten (50, 100), der die Transaktion empfangen hat, die empfangene Transaktion validiert durch
Dekodieren der Daten durch einen öffentlichen Schlüssel des Ursprungsknotens (100), der in dem Knoten (50, 100) gehalten wird,
Vergleichen der dekodierten Daten mit dem in der Transaktion enthaltenen Hash-Wert und Freigeben der Transaktion, wenn die dekodierten Daten mit dem Hash-Wert übereinstimmen, und
wobei die Gruppe von Knoten (100) einen aus der freigegebenen Transaktion zusammengesetzten Block zu einer Blockchain hinzufügt.

2. Fluorkohlenstoffverwaltungssystem (10) nach Anspruch 1, wobei das Fluorkohlenstoff-bezogene Ereignis eines oder mehrere einschließt von: Fluorkohlenstoff-Produktion, Fluorkohlenstoff-Zerstörung, Fluorkohlenstoff-Rückgewinnung, Fluorkohlenstoff-Füllung, Fluorkohlenstoff-Sammlung, einem Wechsel eines Fluorkohlenstoff-Handhabers und einem Transfer einer Vorrichtung, die Fluorkohlenstoff verwendet.

3. Fluorkohlenstoffverwaltungssystem (10) nach Anspruch 1 oder 2, wobei die Transaktion eines oder mehrere einschließt von einem Datum, einem Namen eines Fluorkohlenstoff-Handhabers, Identifikationsinformationen einer Vorrichtung, die Fluorkohlenstoff verwendet, einem Transfervolumen von Fluorkohlenstoff, einer Art des Fluorkohlenstoffs, einem Fluorkohlenstoff-Handhabungsstatus, einer Art des Handhabers, einem Namen eines Fluorkohlenstoff-Produzenten und Identifikationsinformationen eines Fluorkohlenstoffverwalters.

4. Fluorkohlenstoffverwaltungssystem (10) nach Anspruch 3, wobei die Identifizierungsinformationen eines Fluorkohlenstoffverwalters mit einem Namen des Fluorkohlenstoffverwalters in einer anderen Datenbank als der Blockchain verknüpft sind.

5. Fluorkohlenstoffverwaltungssystem (10) nach einem der Ansprüche 1 bis 4, wobei Fluorkohlenstoff-Entsorgungskosten über einen Multi-Signatur-Adressensatz zwischen Knoten (100), die sich auf Fluorkohlenstoff-Entsorgung beziehen, übermittelt werden.

6. Fluorkohlenstoffverwaltungssystem (10) nach einem der Ansprüche 1 bis 5, wobei die Gruppe von Knoten einen Verwaltungsknoten (50) des Fluorkohlenstoffverwaltungssystems einschließt.

7. Fluorkohlenstoffverwaltungssystem (10) nach Anspruch 6, wobei der Verwaltungsknoten (50) so konfiguriert ist, dass er einem Knoten (100) erlaubt, dem Blockchain-Netzwerk beizutreten und den beigetretenen Knoten (100) aus dem Blockchain-Netzwerk zu entfernen.

8. Fluorkohlenstoffverwaltungssystem (10) nach Anspruch 6 oder 7, wobei der Verwaltungsknoten (50) einen Knoten (100) belohnt, der Mining zum Zusammensetzen eines Blocks durchgeführt hat.

9. Fluorkohlenstoffverwaltungssystem (10) nach einem der Ansprüche 6 bis 8, wobei der Verwaltungsknoten (50) Mining zum Zusammensetzen eines Blocks durchführt.

10. Fluorkohlenstoffverwaltungsverfahren für ein Fluorkohlenstoffverwaltungssystem (10), das eine Gruppe von Knoten (100) einschließt, wobei jeder Knoten eine Computervorrichtung ist, und ein Blockchain-Netzwerk, das die Gruppe von Knoten (100) verbindet, wobei das Fluorkohlenstoffverwaltungsverfahren umfasst:
Erzeugen, als Reaktion auf das Auftreten eines vorbestimmten Fluorkohlenstoff-bezogenen Ereignisses, einer Transaktion, die sich auf das Fluorkohlenstoff-bezogene Ereignis bezieht, durch einen Ursprungsknoten, der sich auf das Fluorkohlenstoff-bezogene Ereignis bezieht,
wobei die Transaktion einen Hash-Wert von Transaktionsinformationen über das durchgeführte Fluorkohlenstoff-bezogene Ereignis und Daten einschließt, wobei der Hash-Wert in den Daten durch einen privaten Schlüssel eines Ursprungsknotens (100) kodiert ist, der sich auf das Fluorkohlenstoff-bezogene Ereignis bezieht, und Senden (S201) der erzeugten Transaktion an das Blockchain-Netzwerk;
Validieren der empfangenen Transaktion durch einen Knoten (50, 100), der die Transaktion empfangen hat, durch Dekodieren der Daten durch einen öffentlichen Schlüssel des Ursprungsknotens (100), der in dem Knoten (50, 100) gehalten wird, Vergleichen der dekodierten Daten mit dem in der Transaktion enthaltenen Hash-Wert und Freigeben der Transaktion, wenn die dekodierten Daten mit dem Hash-Wert übereinstimmen; und
Hinzufügen eines aus der freigegebenen Transaktion zusammengesetzten Blocks zu einer Blockchain durch die mit dem Blockchain-Netzwerk verbundene Gruppe von Knoten.

## Revendications

1. Système de gestion de fluorocarbone (10) comprenant :
un groupe de noeuds (100), dans lequel chaque noeud est un dispositif informatique ; et
un réseau de chaîne de blocs reliant le groupe de noeuds (100), dans lequel
en réponse à l'apparition d'un événement prédéterminé lié au fluorocarbone, un noeud (100) d'origine lié à l'événement lié au fluorocarbone,
génère une transaction liée à l'événement lié au fluorocarbone, la transaction incluant
une valeur de hachage d'informations de transaction concernant l'événement lié au fluorocarbone effectué et
des données, dans les données, la valeur de hachage est codée par une clé privée du noeud (100) d'origine, et
envoie la transaction générée au réseau de chaîne de blocs,
un noeud (50, 100) qui a reçu la transaction valide la transaction reçue en
décodant les données par une clé publique du noeud (100) d'origine détenue dans le noeud (50, 100),
comparant les données décodées avec la valeur de hachage contenue dans la transaction et en approuvant la transaction lorsque les données décodées correspondent à la valeur de hachage, et
le groupe de noeuds (100) ajoute un bloc composé à partir de la transaction approuvée à une chaîne de blocs.

2. Système de gestion de fluorocarbone (10) selon la revendication 1, dans lequel l'événement lié au fluorocarbone inclut l'un ou plusieurs parmi production de fluorocarbone, destruction de fluorocarbone, récupération de fluorocarbone, remplissage de fluorocarbone, collecte de fluorocarbone, changement d'un gestionnaire de fluorocarbone, et transfert d'un appareil utilisant du fluorocarbone.

3. Système de gestion de fluorocarbone (10) selon la revendication 1 ou 2, dans lequel la transaction inclut l'un ou plusieurs parmi date, nom d'un gestionnaire de fluorocarbone, informations d'identification d'un appareil utilisant du fluorocarbone, volume de transfert de fluorocarbone, type de fluorocarbone, état de gestion de fluorocarbone, type de gestionnaire, nom d'un producteur de fluorocarbone, et informations d'identification d'un gestionnaire de fluorocarbone.

4. Système de gestion de fluorocarbone (10) selon la revendication 3, dans lequel les informations d'identification d'un gestionnaire de fluorocarbone sont associées à un nom du gestionnaire de fluorocarbone dans une base de données différente de la chaîne de blocs.

5. Système de gestion de fluorocarbone (10) selon l'une quelconque des revendications 1 à 4, dans lequel un coût d'élimination de fluorocarbone est communiqué par le biais d'un ensemble d'adresses multi-signatures parmi des noeuds (100) liés à l'élimination de fluorocarbone.

6. Système de gestion de fluorocarbone (10) selon l'une des revendications 1 à 5, dans lequel le groupe de noeuds inclut un noeud de gestion (50) du système de gestion du fluorocarbone.

7. Système de gestion de fluorocarbone (10) selon la revendication 6, dans lequel le noeud de gestion (50) est configuré pour permettre à un noeud (100) de rejoindre le réseau de chaîne de blocs et pour supprimer le noeud (100) s'étant joint du réseau de chaîne de blocs.

8. Système de gestion de fluorocarbone (10) selon la revendication 6 ou 7, dans lequel le noeud de gestion (50) récompense un noeud (100) qui a effectué un minage pour composer un bloc.

9. Système de gestion de fluorocarbone (10) selon l'une quelconque des revendications 6 à 8, dans lequel le noeud de gestion (50) effectue un minage pour composer un bloc.

10. Procédé de gestion de fluorocarbone pour un système de gestion de fluorocarbone (10). incluant un groupe de noeuds (100), dans lequel chaque noeud est un dispositif informatique, et un réseau de chaîne de blocs reliant le groupe de noeuds (100), le procédé de gestion du fluorocarbone comprenant :
la génération, en réponse à l'apparition d'un événement lié au fluorocarbone prédéterminé, d'une transaction liée à l'événement lié au fluorocarbone par un noeud d'origine lié à l'événement lié au fluorocarbone,
la transaction incluant une valeur de hachage d'informations de transaction concernant l'événement lié au fluorocarbone effectué et des données, dans les données, la valeur de hachage est codée par une clé privée d'un noeud (100) d'origine lié à l'événement lié au fluorocarbone, et l'envoi (S201) de la transaction générée au réseau de chaîne de blocs ;
la validation de la transaction reçue par un noeud (50, 100) qui a reçu la transaction en décodant les données par une clé publique du noeud (100) d'origine détenue dans le noeud (50, 100), en comparant les données décodées avec la valeur de hachage contenue dans la transaction et en approuvant la transaction lorsque les données décodées correspondent à la valeur de hachage ; et
l'ajout d'un bloc composé à partir de la transaction approuvée à une chaîne de blocs par le groupe de noeuds reliés au réseau de chaîne de blocs.
